# EUROPÄISCHE PATENTSCHRIFT

(11) **EP 1 614 398 B1**
(45) Veröffentlichungstag und Bekanntmachung des Hinweises auf die Patenterteilung: **10.11.2010**
(21) Anmeldenummer: 05013979.9
(22) Anmeldetag: 28.06.2005
(51) Int. Cl.: A61C 17/02

(54) **Munddusche mit zwei miteinander verbindbaren Gehäusen**
Mouth shower with two interconnecting receptacles
Dispositif d'irrigation buccale avec deux réceptacles assemblés

(30) Priorität: 08.07.2004 DE 102004032976
(43) Veröffentlichungstag der Anmeldung: 11.01.2006
(73) Patentinhaber: GIMELLI PRODUKTIONS AG, CH-3052 Zollikofen (CH)
(72) Erfinder: Schütz, Alfred, 3052 Zollikofen (CH)
(74) Vertreter: Hebing, Norbert

(56) Entgegenhaltungen:
- DE-A1- 19 525 738
- US-A- 3 144 867

## Beschreibung

Die Erfindung bezieht sich auf eine Munddusche mit zwei miteinander lösbar verbindbaren Gehäusen, wobei das erste Gehäuse ein Pumpengehäuse ist, das in seinem Inneren wenigstens eine Pumpe und am oberen Ende eine Wasseraustrittsdüse aufweist, wobei das zweite Gehäuse ein Wasserreservoir bildet und wobei die Pumpe mit einer über dem Boden des Reservoirs endenden Steigleitung verbunden ist.

Eine derartige Munddusche ist z. B. in der DE 195 25 738 A1 beschrieben: Am oberen Ende eines schlanken Pumpengehäuses befindet sich eine Wasseraustrittsdüse, darunter befindet sich im Pumpengehäuse eine Pumpe, darunter ein Elektromotor zum Antrieb der Pumpe und am Boden des Pumpengehäuses schließlich eine Batterie für die Stromversorgung der Pumpe. Neben dem Pumpengehäuse befindet sich ein zweites, ein Wasserreservoir bildendes Gehäuse, das sich praktisch über die gesamte Länge des Pumpengehäuses erstreckt und mit diesem lösbar verbunden ist. Von der Unterseite eines Erkers am oberen Ende des Pumpengehäuses erstreckt sich bis zum Boden des Reservoirs eine Steigleitung. Diese Anordnung hat zwei Nachteile. Zum einen ergibt sich durch die Parallelanordnung von Pumpengehäuse und Reservoir ein relativ dickes Gebilde, das nur schwer zu greifen ist. Zum anderen kann bei einem Wechsel des Wasserreservoirs die Steigleitung beschädigt werden, da dieses relativ umständlich in das Reservoir eingefädelt werden muss.

Aus dem Dokument US-A-3 144 867 ist Munddusche mit den Merkmalen des Oberbegriffs des Anspruchs 1 bekannt.

Die Erfindung beruht somit auf der Aufgabe, eine Munddusche zu schaffen, die leicht zu halten ist und bei der ein Wechsel des Reservoirs problemlos durchgeführt werden kann.

Zur Lösung des Problems sieht die Erfindung vor, dass die Steigleitung aus dem Pumpengehäuse herausziehbar ist und dass das Ende der Steigleitung einen Kopf aufweist, der an der Unterseite des Pumpengehäuses mittels eines Riegels lösbar fixiert ist, wobei sich am Wasserreservoir ein Betätigungsglied für den Riegel befindet, der so angeordnet ist, dass der Riegel gelöst wird, wenn das Reservoir an dem Pumpengehäuse befestigt wird.

Durch die Reihenanordnung von Pumpengehäuse und Reservoir ergibt sich insgesamt ein schlankes Gehäuse für die Munddusche, die relativ leicht auch für kleine Hände zu greifen ist. Eine Gefahr der Beschädigung der Steigleitung besteht nicht, da diese sich zunächst eingefahren im Pumpengehäuse befindet und erst durch die Befestigung des Reservoirs an der Unterseite des Pumpengehäuses selbsttätig gelöst wird und damit in das Reservoir soweit hineingleitet, dass sich der Kopf mit der Saugöffnung nahe dem Boden des Reservoirs befindet.

Um das Hineingleiten der Steigleitung in das Reservoir zu bewerkstelligen, ist vorgesehen, dass die Steigleitung aus einem stabilen Rohr besteht, das wenigstens so lang ist wie das Reservoir hoch ist, und dass eine Rohrführung im Pumpengehäuse vorhanden ist. Aus dieser Führung rutscht das Rohr relativ leicht selbsttätig unter Wirkung der Schwerkraft oder der einer Feder hinaus; es kann aber auch ebenso leicht wieder manuell hineingeschoben werden, sobald das Reservoir vom Pumpengehäuse gelöst worden ist.

Eine leicht zu handhabende Verbindung des Reservoirs mit dem Pumpengehäuse besteht aus einem Drehverschluss. Dabei handelt es sich vorzugsweise um wenigstens zwei Bajonettverschlüsse. Eine solche Verbindung ist intuitiv beherrschbar und bedarf keiner komplizierten Erläuterungen.

Zum Halten des Kopfes an der Unterseite des Pumpengehäuses ist vorgesehen, dass der Riegel am Kopf befestigt ist und mit einem Hinterschnitt am Boden des Pumpengehäuses zusammenwirkt.

Vorzugsweise besitzt der Boden des Pumpengehäuses einen umlaufenden Rand in Form eines Steges. Dieser besitzt in unmittelbarer Nähe des Kopfes einen nutförmigen Einschnitt, der sich in Umfangsrichtung erstreckt. Des Weiteren besteht der Riegel aus einer flachen, vom Kopf abstehenden Lasche, die in den Einschnitt eingreift, wenn der Kopf so gedreht wird, dass die Lasche zum Rand hin ausgerichtet ist.

Der umlaufende Steg dient auch als Träger von mehreren, an der Innenseite des Steges angeordneten Kulissen des Bajonettverschlusses, die mit entsprechenden, nach außen abstehenden Kulissenzapfen am Reservoir zusammenwirken. Vorzugsweise befinden sich die beiden Verschlüsse in gleichmäßigen Abständen auf dem Umfang des Reservoirs bzw. des Pumpengehäuses, so dass beim Zusammenbau nicht auf eine besondere Ausrichtung der beiden Teile geachtet werden muss. Dies hat allerdings zur Folge, dass eine entsprechende Anzahl von Betätigungsgliedern am Reservoir vorhanden sein muss, so dass unabhängig von der Winkellage zwischen Pumpengehäuse und Reservoir eines der Betätigungsglieder mit dem Riegel des Kopfes zusammenwirkt.

Im einfachsten Fall bestehen die Betätigungsglieder aus randoffenen Ausnehmungen im Rand des Reservoirs. Eine dieser Ausnehmungen umgreift die den Riegel bildende Lasche und nimmt diese mit, wenn das Reservoir gegenüber dem Pumpengehäuse gedreht wird, um die Bajonettverschlüsse zu schließen.

Der Kopf ist an seiner Unterseite mit Abstandstücken versehen, wobei sich die Ansaugöffnung der Steigleitung oberhalb der Abstandstücke befindet. Auf diese Weise wird sichergestellt, dass die Ansaugöffnungen nicht verschlossen werden können, indem sie auf dem Boden des Reservoirs aufsitzen.

Die Abstandstücke bilden weiterhin einen Anschlag am Boden des Reservoirs. Dies ermöglicht es, die Steigleitung mit einer Feder zu belasten, die in Ausfahrrichtung wirkt. Die Feder stellt sicher, dass sich die Ansaugöffnung unabhängig von einer Schrägstellung der Gehäuse stets nahe dem Boden des Reservoirs befindet.

Um ein möglichst großes Reservoir darzustellen, das für Transportzwecke verkleinert werden kann, ist vorgesehen, das Reservoir teleskopartig ausfahrbar zu gestalten, so dass es bei Nichtgebrauch auf eine kleinere Höhe zusammengeschoben werden kann.

Dies macht es in der Regel notwendig, auch das Steigrohr teleskopartig auszugestalten.

Im Folgenden soll anhand eines Ausführungsbeispiels die Erfindung näher erläutert werden. Dazu zeigt:
- Fig. 1: eine perspektivische Sicht auf das untere Ende des Pumpengehäuses bzw. den oberen Rand des Reservoirs,

- Fig. 2: eine weitere Darstellung der Unterseite des Pumpengehäuses mit einer eingefahrenen Steigleitung,
- Fig. 3: das Pumpengehäuse mit einer ausgefahrenen Steigleitung,
- Fig. 4a: den Schnitt durch ein teleskopartig ausfahrbares Reservoir und ein Pumpengehäuse mit einer teleskopartig ausfahrbaren Steigleitung, jeweils im eingefahrenen Zustand,
- Fig. 4b: einen Schnitt entsprechend Fig. 4a mit einer eingefahrenen Steigleitung und einem zusammengeschobenen Reservoir.

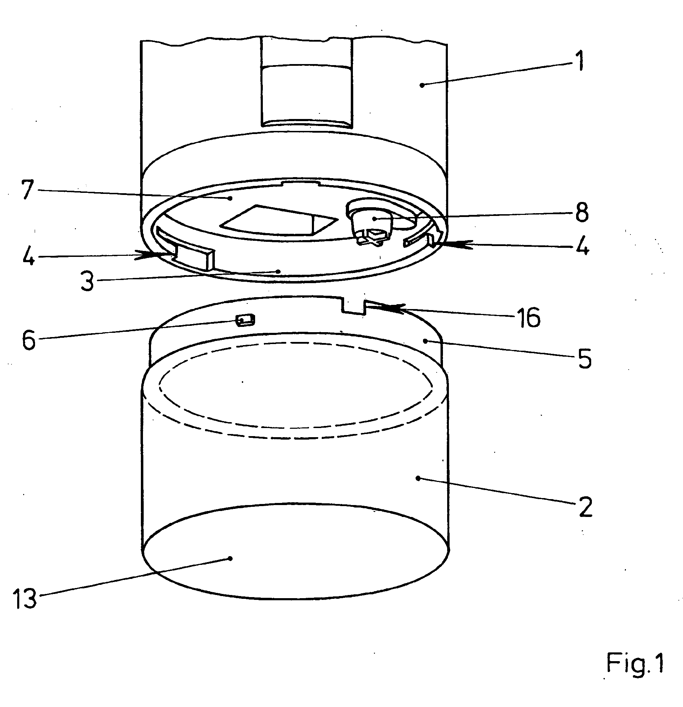

Es wird zunächst auf die Figur 1 Bezug genommen.

Diese zeigt in der oberen Hälfte den unteren Teil eines zylinderförmigen Pumpengehäuses 1. In dem Pumpengehäuse 1 befinden sich, was hier nicht näher dargestellt ist, eine elektromotorische Pumpe und Batterien bzw. wieder aufladbare Batterien zum Antrieb des Motors. An der Unterseite befindet sich ein Wasserreservoir 2, das ebenfalls zylinderförmig ist und dieselben Außendurchmesser aufweist, so dass die beiden Gehäuse bündig ineinander übergehen und ein Mundduschengehäuse mit einer durchgehenden Zylinderform bilden.

Zum Verbinden des Pumpengehäuses 1 und des Reservoirs 2 besitzt das Pumpengehäuse 1 einen umlaufenden Steg 3, an dessen Innenseite sich drei Kulissen 4 für Bajonettverschlüsse befinden.

Der obere Rand 5 des Reservoirs 2 ist stufenförmig nach innen abgesetzt und kann so in die vom Steg 3 gebildete Öffnung eingeführt werden. An der Außenseite des Randes 5 befinden sich Kulissenzapfen 6, die in die Kulissen 4 eingeführt werden, wobei durch eine Drehung des Reservoirs 2 um seine Längsachse die Kulissenzapfen 6 in den in Umlaufrichtung verlaufenden Abschnitt der Kulisse 4 eingeführt werden.

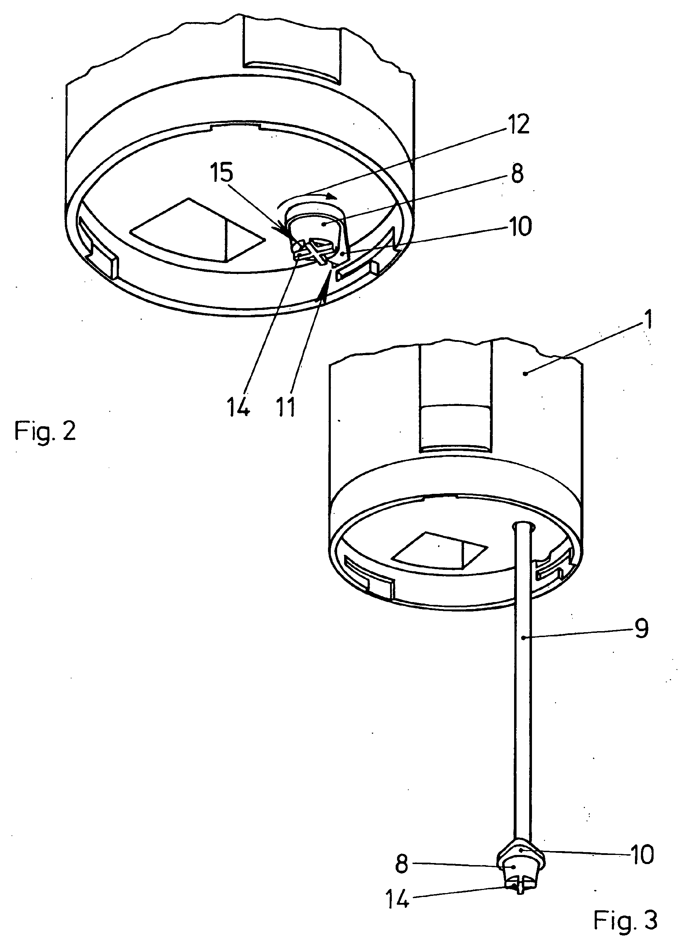

Am Boden 7 des Pumpengehäuses 1 befindet der Kopf 8 einer Steigleitung 9, die, wie dies die Figur 3 zeigt, aus dem Pumpengehäuse herausgezogen werden kann.

Die Steigleitung 9 besteht aus einem stabilen Rohr, das in einer entsprechenden, hier nicht näher dargestellten Führung im Pumpengehäuse 1 geführt ist, so dass die Steigleitung 9 in axialer Richtung sowohl ein- als auch ausgefahren werden kann.

Damit die Steigleitung 9 in der eingefahrenen Stellung fixiert werden kann, besitzt der Kopf 8 eine seitlich abstehende, als Riegel fungierende Lasche 10, die in einen nutförmigen Einschnitt 11 an der Innenseite des Steges 3 eingreift. Die Figur 2 zeigt die Verriegelungsstellung der Steigleitung 9: Der Kopf 8 ist so gedreht, dass die Lasche 10 in den Einschnitt 11 eingreift und so den Kopf 8 am Boden des Pumpengehäuses 1 hält. Durch Drehen des Kopfes 8 in der durch den Pfeil 12 angezeigten Richtung wird das Ende der Lasche 10 aus dem Einschnitt 11 herausgedreht, so dass nun der Kopf 8 zusammen mit der Steigleitung 9 aus der Führung herausrutschen kann. Dies geschieht automatisch beim Ansetzen des Reservoirs 2 an das Pumpengehäuse 1. Dazu besitzt der Rand 5 des Reservoirs 2 entsprechend der Anzahl der Bajonettverschlüsse randoffene Ausnehmungen 16, von denen eine die Lasche 10 umgreift, wenn die Kulissenzapfen 6 in den vertikalen Abschnitt der Kulissen 4 eingeführt werden. Bei einer Drehung des Reservoirs 2 zum Verriegeln der Bajonettverschlüsse nimmt die Ausnehmung 16 die Lasche 10 mit, so dass diese aus dem Einschnitt 11 herausgeführt wird und der Kopf 8 und die Steigleitung aus der Führung herausfallen.

Die Steigleitung ist so lang, dass der Kopf 8 bis zum Boden 13 des Reservoirs 2 reicht. Abstandstücke 14 an der Unterseite halten den Kopf 8 knapp oberhalb des Bodens 13 und verhindern damit, dass die Ansaugöffnung 15 durch den Boden des Reservoirs 2 verschlossen wird. Eine hier nicht näher dargestellte Feder hält den Kopf 8 in dieser Position am Boden des Reservoirs 2.

Nachdem das Reservoir 2 entfernt worden ist, kann zunächst die Steigleitung 9 manuell zurückgeschoben und am Boden des Pumpengehäuses 1 fixiert werden, indem durch Drehen des Kopfes 8 die Lasche 10 in den Einschnitt 11 geführt wird. Die Steigleitung 9 liegt damit geschützt im Pumpengehäuse 1. Beim erneuten Ansetzen des Reservoirs 2 wird die Verriegelung wieder gelöst und die Steigleitung 9 gleitet in das Reservoir.

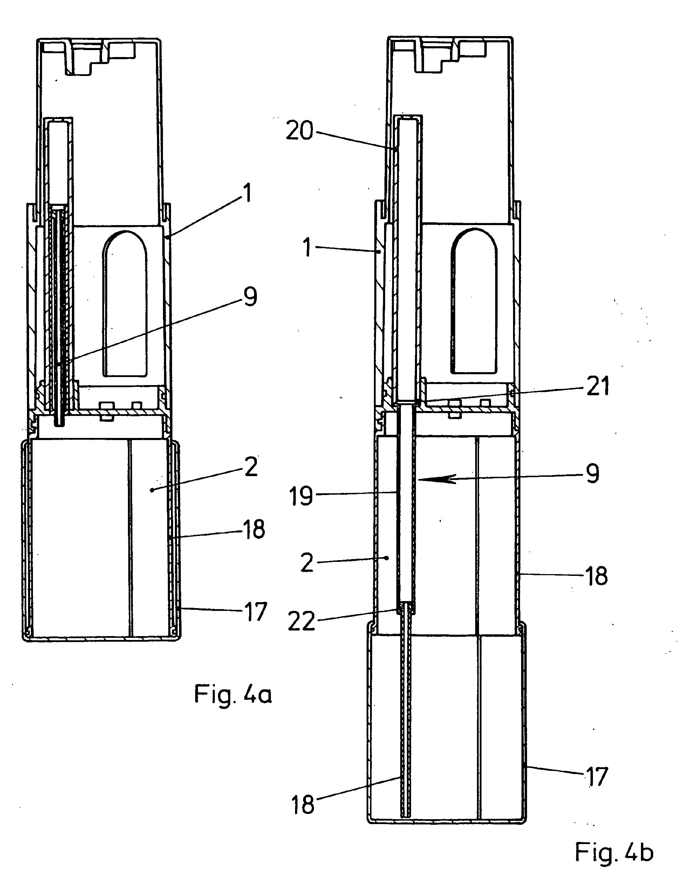

Fig. 4a und 4b zeigen eine Kombination aus einem Pumpengehäuse 1 und einem Reservoir 2, wobei das Reservoir 2 aus zwei Teilen besteht, nämlich einem Boden- und einem Hülsenteil 17 bzw. 18, die teleskopartig ineinander geschoben werden können und die in etwa die gleiche Höhe haben, so dass das Reservoir 2 zu Transportzwecken, wie in Fig. 4a zu erkennen, auf etwa halbe Höhe seines ausgefahrenen Zustandes (Fig. 4b) zusammengefahren werden kann. Der obere Rand des Hülsenteils 17 wird dabei in gleicher Weise mit der Unterseite des Pumpengehäuses 1 gekoppelt, wie dies weiter oben beschrieben ist.

Da im Gebrauch damit ein größeres und damit höheres Reservoir zur Verfügung steht, muss die Steigleitung 9 eine entsprechend größere Länge haben, um den Boden des Reservoirs 2 zu erreichen, und ist damit nicht ohne weiteres im Pumpengehäuse 1 unterzubringen. Daher ist auch die Steigleitung 9 teleskopartig ausfahrbar gestaltet und weist dazu ein Endteil 18 und ein Zwischenteil 19 auf, wobei das Endteil 18 im Zwischenteil 19 geführt ist, das wiederum in einer Aufnahmehülse 20 im Pumpengehäuse 1 geführt ist.

Im eingefahrenen Zustand (siehe Fig. 4a) ist das Endteil 18 im Zwischenteil 19 angeordnet, das wiederum in der Aufnahmehülse 20 liegt. Im ausgefahrenen Zustand, siehe Fig. 4b, sind die beiden Teile 18, 19 jeweils bis zu einem Anschlag 21, 22 aus der Aufnahmehülse 20 bzw. aus dem Zwischenteil 19 herausgezogen. Am unteren freien Ende des Endteils 18 befindet sich - was aus Übersichtsgründen nicht näher dargestellt ist - ein Kopf 8, wie er oben näher beschrieben ist.

### Bezugszeichenliste

- 1: Pumpengehäuse
- 2: Wasserreservoir
- 3: Steg
- 4: Kulisse
- 5: Rand

- 6: Kulissenzapfen
- 7: Boden
- 8: Kopf
- 9: Steigleitung
- 10: Lasche

- 11: Einschnitt
- 12: Pfeil
- 13: Boden
- 14: Abstandstück
- 15: Ansaugöffnung

- 16: Ausnehmung
- 17: Bodenteil
- 18: Endteil
- 19: Zwischenteil
- 20: Aufnahmehülse

- 21: Anschlag
- 22: Anschlag

## Patentansprüche

1. Munddusche mit zwei miteinander lösbar verbindbaren Gehäusen, wobei das erste Gehäuse ein Pumpengehäuse (1) ist, das in seinem Inneren wenigstens eine Pumpe und am oberen Ende eine Wasseraustrittsdüse aufweist, wobei das zweite Gehäuse ein Wasserreservoir (2) bildet und wobei die Pumpe mit einer über dem Boden des Reservoirs (2) endenden Steigleitung (9) mit dem Reservoir (2) verbunden ist, wobei das Wasserreservoir (2) an der Unterseite des Pumpengehäuses (1) lösbar befestigt ist, **dadurch gekennzeichnet, dass** die Steigleitung (9) aus dem Pumpengehäuse (1) herausziehbar ist und dass das Ende der Steigleitung einen Kopf (8) aufweist, der an der Unterseite des Pumpengehäuses (1) mittels eines Riegels lösbar fixiert ist, wobei sich am Wasserreservoir (2) ein Betätigungsglied für den Riegel befindet, der so angeordnet ist, dass der Riegel gelöst wird, wenn das Reservoir (2) an dem Pumpengehäuse (1) befestigt wird.

2. Munddusche nach Anspruch 1, **dadurch gekennzeichnet, dass** die Steigleitung (9) aus einem stabilen Rohr besteht, das wenigstens so lang ist wie das Reservoir (2) hoch ist, und dass eine Rohrführung im Pumpengehäuse (1) vorhanden ist.

3. Munddusche nach Anspruch 1 oder 2, **dadurch gekennzeichnet, dass** das Reservoir (2) mittels eines Drehverschlusses mit dem Pumpengehäuse (1) verbunden ist.

4. Munddusche nach Anspruch 3, **dadurch gekennzeichnet, dass** wenigstens zwei Bajonettverschlüsse zur Verbindung des Reservoirs (2) mit dem Pumpengehäuse (1) vorgesehen sind.

5. Munddusche nach einem der vorhergehenden Ansprüche, **dadurch gekennzeichnet, dass** der Riegel am Kopf (8) befestigt ist und einen Hinterschnitt am Boden (7) des Pumpengehäuses (1) hintergreift.

6. Munddusche nach Anspruch 5, **dadurch gekennzeichnet, dass** der Boden (7) des Pumpengehäuses (1) einen umlaufenden Rand (5) in Form eines Steges (3) aufweist, dass der Riegel als flache, vom Kopf (8) abstehende Lasche (10) ausgebildet ist und dass der Steg (3) in unmittelbarer Nähe des Kopfes (8) einen nutförmigen Einschnitt hat, in der das Ende der Lasche (10) eingreift, wenn die Lasche (10) zum Rand (5) ausgerichtet ist.

7. Munddusche nach Anspruch 4, **dadurch gekennzeichnet, dass** die Bajonettverschlüsse aus mehreren, an der Innenseite des Steges (3) verteilten Kulissen (4) ausgebildet sind, und dass an der Außenseite des Reservoirs (2) mehrere, nach außen stehende Kulissenzapfen (6) vorhanden sind.

8. Munddusche nach Anspruch 7, **dadurch gekennzeichnet, dass** die Bajonettverschlüsse in gleichmäßigen Abständen auf dem Umfang des Reservoirs (2) bzw. des Pumpengehäuses (1) verteilt sind und dass eine entsprechende Anzahl von Betätigungsgliedern am Reservoir (2) vorhanden ist.

9. Munddusche nach Anspruch 8, **dadurch gekennzeichnet, dass** die Betätigungsglieder durch randoffene Ausnehmungen im Rand (5) des Reservoirs (2) gebildet sind.

10. Munddusche nach einem der vorhergehenden Ansprüche, **dadurch gekennzeichnet, dass** an der Unterseite des Kopfes (8) Abstandstücke vorhanden sind und dass sich die Ansaugöffnung (15) oberhalb der Abstandstücke befindet.

11. Munddusche nach einem der vorhergehenden Ansprüche, **dadurch gekennzeichnet, dass** das Reservoir (2) teleskopartig ausfahrbar gestaltet ist.

12. Munddusche nach einem der vorhergehenden Ansprüche, insbesondere nach Anspruch 11, **dadurch gekennzeichnet, dass** das Steigrohr (9) teleskopartig gestaltet ist.

## Claims

1. A mouth rinsing device with two detachable interconnecting receptacles, wherein the first receptacle is a pump housing (1) having in its interior at least one pump and a water outlet nozzle on its upper end, wherein the second receptacle forms a water reservoir (2) and wherein the pump is connected to the reservoir (2) via a riser tube (9) that ends above the base of the reservoir (2), wherein the water reservoir (2) is detachably attached to the underside of the pump housing (1), **characterized in that** the riser tube (9) is able to be withdrawn from the pump housing (1) and that the end of the riser tube has a head (8) that is detachably fixed to the underside of the pump housing (1) via a latch, wherein an actuating member for the latch is located on the water reservoir (2) in such a manner that the latch is released when the reservoir (2) is secured to the pump housing (1).

2. The mouth rinsing device according to claim 1, **characterized in that** the riser tube (9) consists of a rigid pipe that is at least as long as the reservoir is high, and that a pipe guide is present in the pump housing (1).

3. The mouth rinsing device according to claim 1 or 2, **characterized in that** the reservoir (2) is connected to the pump housing (1) via a twist lock.

4. The mouth rinsing device according to claim 3, **characterized in that** at least two bayonet locks are provided for connecting the reservoir (2) to the pump housing (1).

5. The mouth rinsing device according to any one of the preceding claims, **characterized in that** the latch is fixed to the head (8) and engages behind an undercut at the base (7) of the pump housing (1).

6. The mouth rinsing device according to claim 5, **characterized in that** the base (7) of the pump housing (1) has an edge (5) in the form of a web (3) extending round the circumference thereof, that the latch is designed as a flat tab (10) protruding from the head (8), and that the web (3) has a notch in the form of a groove in the immediate vicinity of the head (8), whereby the end of the tab (10) engages with the notch when the tab (10) is aligned with the edge (5).

7. The mouth rinsing device according to claim 4, **characterized in that** the bayonet locks are formed by several slotted guides (4) arranged on the inside of the web (3), and that several outwardly protruding guide pins (6) are present on the outside of the reservoir (2).

8. The mouth rinsing device according to claim 7, **characterized in that** the bayonet locks are arranged at regular intervals on the circumference of the reservoir (2) and the pump housing (1), and that a corresponding number of actuating members is present on the reservoir (2).

9. The mouth rinsing device according to claim 8, **characterized in that** the actuating members are formed by open-edge recesses in the edge (5) of the reservoir (2).

10. The mouth rinsing device according to any one of the preceding claims, **characterized in that** spacing elements are present on the underside of the head (8), and that the intake opening (15) is located above the spacing elements.

11. The mouth rinsing device according to any one of the preceding claims, **characterized in that** the reservoir (2) is constructed so as to be telescopically extendable.

12. The mouth rinsing device according to any one of the preceding claims, particularly according to claim 11, **characterized in that** the riser tube (9) is constructed so as to be telescopically extendable.

## Revendications

1. Dispositif d'irrigation buccale comprenant deux réceptacles pouvant être assemblés de manière dissociable, le premier réceptacle étant un réceptacle de pompe (1) qui présente à l'intérieur au moins une pompe et une buse de sortie d'eau à son extrémité supérieure, le second réceptacle constituant un réservoir à eau (2) et la pompe étant raccordée par une conduite ascendante (9) se terminant au dessus du fond du réservoir (2) au réservoir (2), le réservoir à eau (2) étant fixé de manière dissociable à la face inférieure du réceptacle de la pompe (1), **caractérisé en ce que** la conduite ascendante (9) peut être extraite du réceptacle de la pompe (1) et que l'extrémité de la conduite ascendante présente une tête (8) qui est fixée de manière dissociable à la face inférieure du réceptacle de la pompe (1) au moyen d'un verrou, sachant que se trouve sur le réservoir à eau (2) un élément d'actionnement servant pour le verrou et qui est disposé de manière à ce que le verrou soit débloqué lorsque le réservoir (2) est fixé au réceptacle de la pompe (1).

2. Dispositif d'irrigation buccale selon la revendication 1, **caractérisé en ce que** la conduite ascendante (9) est composée d'un tuyau stable qui est au moins aussi long que le réservoir (2) est haut et qu'un guide de tuyau est prévu dans le réceptacle de la pompe (1).

3. Dispositif d'irrigation buccale selon la revendication 1 ou 2, **caractérisé en ce que** le réservoir (2) est raccordé au réceptacle de la pompe (1) au moyen d'une capsule rotative.

4. Dispositif d'irrigation buccale selon la revendication 3, **caractérisé en ce qu'**il est prévu au moins deux fermetures à baïonnette pour raccorder le réservoir (2) au réceptacle de la pompe (1).

5. Dispositif d'irrigation buccale selon une des revendications précédentes, **caractérisé en ce que** le verrou est fixé à la tête (8) et s'engrène par derrière dans une contre-dépouille du fond (7) du réceptacle de la pompe (1).

6. Dispositif d'irrigation buccale selon la revendication 5, **caractérisé en ce que** le fond (7) du réceptacle de la pompe (1) présente un bord périphérique (5) en forme de traverse (3), que le verrou est réalisé sous forme d'une bride plate (10) dépassant de la tête (8) et que la traverse (3) possède, à proximité immédiate de la tête (8), une incision en forme de gorge dans laquelle s'engrène l'extrémité de la bride (10) lorsque la bride (10) est alignée par rapport au bord (5).

7. Dispositif d'irrigation buccale selon la revendication 4, **caractérisé en ce que** les fermetures à baïonnette sont constituées de plusieurs coulisses (4) réparties sur la face intérieure de la traverse (3) et que plusieurs tourillons de coulisses (6) proéminents vers l'extérieur sont prévus sur la face extérieure du réservoir (2).

8. Dispositif d'irrigation buccale selon la revendication 7, **caractérisé en ce que** les fermetures à baïonnette sont réparties à distances régulières sur la circonférence du réservoir (2) ou du réceptacle de la pompe (1) et qu'un nombre correspondant d'éléments d'actionnement est prévu au niveau du réservoir (2).

9. Dispositif d'irrigation buccale selon la revendication 8, **caractérisé en ce que** les éléments d'actionnement sont constitués par des échancrures ouvertes dans le bord pratiquées dans le bord (5) du réservoir (2).

10. Dispositif d'irrigation buccale selon une des revendications précédentes, **caractérisé en ce que** des entretoises sont prévues sur la face inférieure de la tête (8) et que l'orifice d'aspiration (15) se trouve au dessus des entretoises.

11. Dispositif d'irrigation buccale selon une des revendications précédentes, **caractérisé en ce que** le réservoir (2) est conçu de manière à pouvoir être déployé télescopiquement.

12. Dispositif d'irrigation buccale selon une des revendications précédentes, notamment selon la revendication 11, **caractérisé en ce que** le tuyau ascendant (9) est conçu de manière à pouvoir être déployé télescopiquement.
